# EUROPÄISCHE PATENTANMELDUNG

(11) **EP 2 053 524 A1**
(43) Veröffentlichungstag der Anmeldung: **29.04.2009**
(21) Anmeldenummer: 08022475.1
(22) Anmeldetag: 09.02.2005
(51) Int. Cl.: G06F 17/30

(54) **Vorgangsbearbeitungsmodul und Verfahren zum Erfassen von Daten**

(62) Teilanmeldung aus: 05002653.3
(71) Anmelder: Deutsche Post AG, 53113 Bonn (DE)
(72) Erfinder: Kranz, Jürgen, 50374 Erftstadt (DE); Westerweller, Jörg, 51570 Windeck / Rosbach (DE)
(74) Vertreter: Jostarndt, Hans-Dieter

(57) **Zusammenfassung**

Die Erfindung betrifft ein Vorgangsbearbeitungsmodul, das sich dadurch auszeichnet, dass es wenigstens eine Komponente (30, 60) zum Erfassen und/oder Bearbeiten von Datenelementen und einen Datencontainer (20) aufweist, wobei der Datencontainer (20) Datenobjekte (90) umfasst, die jeweils einem Datenelement zugeordnet sind und veränderbare Werte und vorgegebene Eigenschaften der Datenelemente enthalten, und wobei die Komponente zum Erfassen und/oder Bearbeiten von Datenelementen die in den Datenobjekten (90) enthaltenen Werte verändert und bei einer Veränderung eines Wertes in einem Datenobjekt (90) überprüft, ob der geänderte Wert die in dem Datenobjekt (90) enthaltenen Eigenschaften aufweist.

Ferner betrifft die Erfindung ein Vorgangsbearbeitungssystem zum Bearbeiten eines Vorgangs, bei dem der Vorgang in wenigstens zwei Teilvorgänge aufgeteilt ist, wobei jedem Teilvorgang ein Vorgangsbearbeitungsmodul (10) Bearbeitung des Teilvorgangs zugeordnet ist.

Darüber hinaus betrifft die Erfindung ein Verfahren zum Erfassen und/oder Verarbeiten eines Datenelements.

## Beschreibung

Die Erfindung betrifft ein Vorgangsbearbeitungsmodul und ein Verfahren zum Erfassen von Daten.

Dienstleistungsunternehmen, die beispielsweise im Finanz-, Versicherungs- oder Logistikwesen tätig sind, bieten ihren Kunden oftmals ein breites Spektrum unterschiedlicher Dienstleistungen an. Mit den Dienstleistungen sind Geschäftsprozesse, wie beispielsweise die Eröffnung eines Bankkontos, das Abheben eines Geldbetrages von einem Bankkonto, der Abschluss einer Versicherung oder der Verkauf eines Postwertzeichens verbunden, bei denen bestimmte Daten, wie beispielsweise Kundendaten oder Geldbeträge, erfasst und bearbeitet werden.

Die Prozesse werden in der Regel in Datenverarbeitungsanlagen bearbeitet, bei denen es sich beispielsweise um Computer an Verkaufsplätzen in einer Filiale eines Unternehmens, um Datenverarbeitungsanlagen eines Verkaufsautomaten des Unternehmens oder um Datenverarbeitungsanlagen handelt, die über ein Netzwerk, wie beispielsweise das Internet, mit einem Computer des Kunden verbunden sind.

Üblicherweise sind den Prozessen ein oder mehrere Vorgänge zugeordnet, die innerhalb der Datenverarbeitungsanlagen ausgeführt werden. Nach Abschluss eines Prozesses ergeben sich als Resultat der Vorgänge Daten, die von weiteren Systemen weiterbearbeitet werden. Beispielsweise werden erfasste Kundendaten in Datenbanken gespeichert, und bei dem Prozess angefallene Geldbeträge werden an ein Buchhaltungssystem übergeben, um verbucht bzw. abgerechnet zu werden.

Von besonderer Bedeutung bei der Bearbeitung der Vorgänge ist die Datensicherheit. Dabei ist es wünschenswert, die Daten bei der Ausführung eines Vorgangs so zu bearbeiten bzw. abzuspeichern, dass sie etwa beim Auftreten eines Fehlers zuverlässig wiederhergestellt werden können.

Typischerweise ist ein umfangreiches Dienstleistungsangebot darüber hinaus mit einer Vielzahl von Geschäftsprozessen verbunden, so dass eine Vielzahl unterschiedlicher Vorgänge bereitgestellt werden muss. Wünschenswert ist es dabei, Vorgänge einfach und flexibel in einem Vorgangsbearbeitungssystem zu implementieren. Ferner ist es wünschenswert, die Vorgänge schnell, einfach und flexibel verändern bzw. anpassen zu können.

Erfindungsgemäß wird dazu ein Vorgangsbearbeitungsmodul nach dem Patentanspruch 1 bereitgestellt.

Erfindungsgemäß wird dazu ferner ein Verfahren zum Erfassen und/oder Verarbeiten eines Datenelements nach dem Patentanspruch 13 bereitgestellt.

Das Vorgangsbearbeitungsmodul ist erfindungsgemäß so ausgebildet, dass es wenigstens eine Komponente zum Erfassen und/oder Bearbeiten von Datenelementen und einen Datencontainer aufweist, wobei der Datencontainer Datenobjekte umfasst, die veränderbare Werte und vorgegebene Eigenschaften der Datenelemente enthalten, und wobei die Komponente zum Erfassen und/oder Bearbeiten von Datenelementen die in den Datenobjekten enthaltenen Werte verändert und bei einer Veränderung eines Wertes in einem Datenobjekt überprüft, ob der geänderte Wert die in dem Datenobjekt enthaltenen Eigenschaften aufweist.

Unter einem Vorgangsbearbeitungsmodul wird dabei ein Modul verstanden, welches zur Bearbeitung von Vorgängen und insbesondere zur Erfassung und/oder zur Bearbeitung von Daten innerhalb von Vorgängen verwendet wird, die Prozesse, wie beispielsweise Geschäftsprozesse, abbilden. Das Vorgangbearbeitungsmodul kann dabei beispielsweise ein Bestandteil eines Computerprogramms zur Bearbeitung eines oder mehrerer Prozesse sein oder als eigenständiges Computerprogramm realisiert sein.

Die Elemente der Menge der von dem Vorgangsbearbeitungsmodul erfassten und/oder bearbeiteten Daten werden als Datenelemente bezeichnet.

Vorteilhaft weist das Vorgangsbearbeitungsmodul neben einer oder mehreren Komponenten zur Erfassung und/oder Bearbeitung einen Datencontainer zum Speichern von Datenobjekten auf, die insbesondere den Wert der Datenelemente enthalten. Der Datenbestand des Vorgangsbearbeitungsmoduls, der in Form der Datenobjekte vorliegt, kann somit in einfacher Weise gespeichert und, etwa nach einem Systemabsturz, wiederhergestellt werden.

Vorzugsweise kann dabei jedem Datenelement, das von dem Vorgangsbearbeitungsmodul erfasst und/oder verarbeitet wird, ein Datenobjekt zugeordnet werden. Der Datencontainer enthält damit den gesamten "Zustand" eines Vorgangs. Der vollständige Vorgang kann somit besonders einfach gesichert und gegebenenfalls wiederhergestellt werden.

Neben den Werten der Daten enthalten die Datenobjekte zudem Eigenschaften der Daten, welche vorzugsweise Beschränkungen zugelassener Werte beschreiben. Dabei kann es sich bei Daten in einem Zahlenformat beispielsweise, um Wertebereiche oder vorgegebene diskrete Zahlenwerte handeln, oder es kann eine vorgegebene Minimal- und/oder Maximallänge einer Zeichenkette angegeben werden.

Anhand der in den Datenobjekten angegebenen Eigenschaften ist eine einfache Prüfung der Werte der Datenelemente möglich, wobei die Kriterien, nach denen die Prüfung erfolgt, nicht innerhalb von Operationen hinterlegt werden müssen, welche die Prüfung durchführen, sondern in dem Datenobjekt selbst angegeben sind.

Das Vorgangsbearbeitungsmodul kann damit schnell und einfach an geänderte Bedingungen angepasst werden, indem die in den Datenobjekten hinterlegten Eigenschaften angepasst werden.

Anhand der in dem Datencontainer enthaltenen Datenobjekte kann somit das Verhalten des Vorgangs weitgehend vorgegeben werden. Die Konfiguration des Verhaltens ist damit von der Vorgabe bestimmter Operationen entkoppelt, so dass zur Bearbeitung von Vorgängen auf Standardoperationen zurückgegriffen werden kann, die für eine Vielzahl von Vorgängen durchgeführt werden.

Die Erfassung von Daten lässt sich innerhalb des erfindungsgemäßen Vorgangsbearbeitungsmoduls dadurch realisieren, dass Werte von bestehenden Datenobjekten verändert werden. Gleichfalls ist es jedoch auch möglich, neue Datenobjekte anzulegen und Werte in diese einzutragen. Zur Anzeige von Daten kann ebenfalls auf die Werte des Datencontainers zugegriffen werden.

In einer bevorzugten Ausführungsform der Erfindung ist es vorgesehen, dass die Datenobjekte jeweils einem Datenfeld zugeordnet sind, das innerhalb einer grafischen Benutzeroberfläche auf einem Anzeigemittel darstellbar ist.

Vorzugsweise verfügt das Vorgangsbearbeitungsmodul zudem über eine Präsentationskomponente, welche den Inhalt der Datenfelder und die Werte in den zugeordneten Datenobjekten synchronisiert.

Dabei wird zunächst der in einem Datenobjekt enthaltene Wert in dem Datenfeld angezeigt. Falls der Inhalt des Datenfeldes durch eine Eingabe geändert wird, verändert die Präsentationskomponente den in dem Datenobjekt enthaltenen Wert entsprechend.

Vorteilhaft ist es vorgesehen, dass die Präsentationskomponente die Datenfelder in Abhängigkeit einer in den Datenobjekten enthaltenen Angabe darüber, ob die Datenfelder aktiviert sind, innerhalb der grafischen Benutzeroberfläche darstellt.

Die Präsentationskomponente kann somit als passive Standardkomponente ausgebildet sein, die einer Vielzahl verschiedener Vorgangsbearbeitungsmodule in gleicher Weise eingesetzt werden kann. Die Konfiguration der Präsentationskomponente erfolgt dabei anhand'der in dem Datencontainer des Vorgangsbearbeitungsmoduls enthaltenen Datenobjekte, in denen insbesondere angegeben wird, ob ein Datenfeld innerhalb der grafischen Benutzeroberfläche dargestellt werden soll.

In einer bevorzugten Ausführungsform der Erfindung weist das Vorgangsbearbeitungsmodul darüber hinaus eine Funktionseinheit auf, die Operationen zur Bearbeitung der in dem Datencontainer enthaltenen Datenobjekte durchführt.

Die Funktionseinheit entspricht damit einer so genannten Business Logic des Vorgangsbearbeitungsmoduls, die eine Datenverarbeitung innerhalb des Moduls ermöglicht.

In einer weiteren bevorzugten Ausführungsform ist es vorgesehen, dass der Datencontainer wenigstens eine mehrere Datenobjekte umfassende Datenobjektgruppe aufweist, wobei eine von der Funktionseinheit bereitgestellte Operation zur Bearbeitung der Datenobjekte für die von der Datenobjektgruppe umfassten Datenobjekte gleichzeitig durchgeführt wird.

Damit können Operationen zur Bearbeitung der Datenelemente bzw. Datenobjekte in einfacher Weise für mehrere Datenobjekte gleichzeitig durchgeführt werden.

Vorteilhaft stellt die Funktionseinheit des Vorgangsbearbeitungsmoduls eine Operation zum Erzeugen von Datenobjekten bereit.

Dies erlaubt eine besonders flexible Verarbeitung von Daten, bei der über die den Datenfeldern zugeordneten Datenobjekte hinaus weitere Datenobjekte erzeugt und in den Datencontainer eingebracht werden können.

In einer weiteren bevorzugten Ausführungsform der Erfindung enthalten die Datenobjekte eine Kennung der den Datenobjekten zugeordneten Datenelemente.

Vorteilhaft ist es ferner vorgesehen, dass die Funktionseinheit eine Operation bereitstellt, welche die Datenobjekte in ein XML-Dokument umwandelt, wobei eine Zuordnung zwischen der in einem Datenobjekt enthaltenen Kennung und dem in dem Datenobjekt enthaltenen Wert in dem XML-Dokument gespeichert wird.

Es ist somit in einfacher Weise möglich, die Datenobjekte in einem XML-Dokument zu speichern, welches beispielsweise den dem Vorgangsbearbeitungsmodul nachgeschalteten Systemen zur Datenhaltung oder -verarbeitung übergeben werden kann.

Vorzugsweise stellt die Funktionseinheit ferner wenigstens eine Operation zum Verändern der Eigenschaften der in dem Datencontainer enthaltenen Datenobjekte bereit.

Vorzugsweise stellt die Funktionseinheit darüber hinaus eine Operation bereit, die ein weiteres Vorgangsbearbeitungsmodul startet.

Hierdurch ist es insbesondere möglich, Vorgänge in Teilvorgänge zu untergliedern, wobei die Funktionseinheit eines Vorgangsbearbeitungsmoduls, das zur Bearbeitung eines Teilvorgangs vorgesehen ist, ein weiteres Vorgangsbearbeitungsmodul startet, welches zur Bearbeitung eines nachfolgenden Teilvorgangs verwendet wird.

Die dadurch erreichbare Modularität der Vorgangsbearbeitungsmodule erhöht die Flexibilität bei der Bearbeitung von Vorgängen und verhindert eine unnötige Redundanz bei der Implementierung von Vorgängen.

Ein weiterer Gegenstand der Erfindung ist ein Vorgangsbearbeitungssystem zur Bearbeitung eines Vorgangs, wobei der Vorgang in wenigstens zwei Teilvorgänge unterteilt ist, und wobei jedem Teilvorgang ein Vorgangsbearbeitungsmodul zur Bearbeitung des Teilvorgangs zugeordnet ist.

Es wird zudem ein Verfahren zum Erfassen und/oder Verarbeiten eines Datenelements geschaffen, das sich dadurch auszeichnet, dass bei der Erfassung und/oder bei der Verarbeitung des Datenelements ein Wert innerhalb eines dem Datenelement zugeordneten Datenobjekts verändert wird und überprüft wird, ob der geänderte Wert eine in dem Datenobjekt angegebene Eigenschaft aufweist.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Figur.

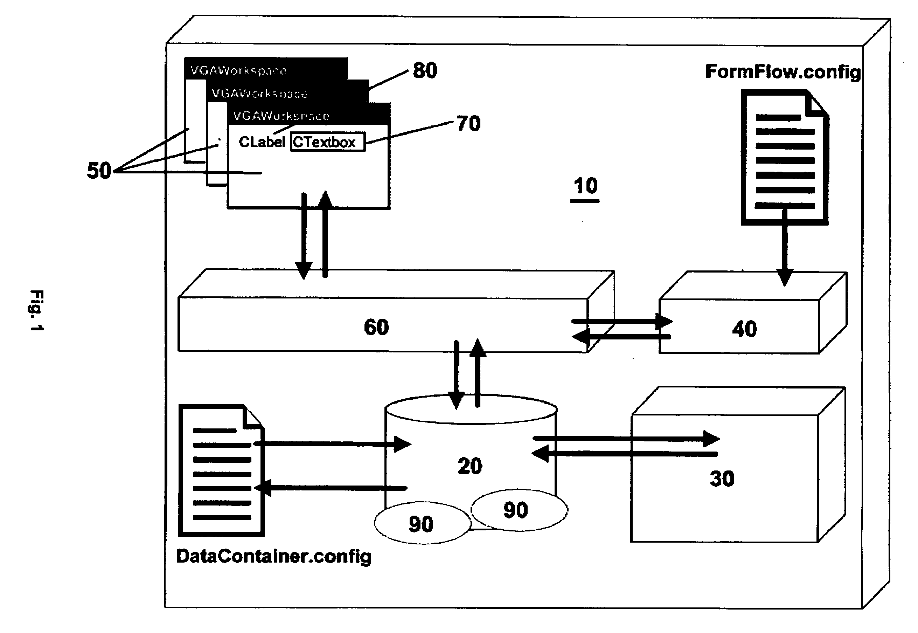

Figur 1 zeigt eine schematische Darstellung von Komponenten eines Vorgangsbearbeitungsmoduls und deren Zusammenwirken in einer bevorzugten Ausgestaltung des Moduls.

Zur Bearbeitung von Prozessen, wie insbesondere Geschäftsprozessen, die beispielsweise von Bank-, Versicherungs- und Logistikunternehmen durchgeführt werden, wird eine als CARBON (Component ARchitecture for Business OptimizatioN) -Plattform bezeichnete Plattform genutzt, die vorzugsweise als Software realisiert ist und auf den Datenverarbeitungsanlagen zur Durchführung der Prozesse installiert ist.

Als Datenverarbeitungsanlage können dabei Computer verwendet werden, die beispielsweise in einer Filiale eines Unternehmens von einem Bediener bedient werden. Die Computer verfügen dabei vorzugsweise über ein Anzeigemittel, ein Eingabemittel, einen Speicher und eine Prozessor-Einheit zur Durchführung von Berechnungen.

Ferner können als Datenverarbeitungsanlage Computer zur Steuerung von Verkaufsautomaten, wie beispielsweise Briefmarkenautomaten, genutzt werden, wobei die Verkaufsautomaten vorzugsweise ebenfalls über Anzeige- und Eingabemittel verfügen, die mit dem Computer verbunden sind, welcher eine Speicher- und eine Prozessoreinheit aufweist.

Anhand der CARBON-Plattform können Geschäftsprozesse zudem über ein Netzwerk, wie beispielsweise ein lokales Netzwerk oder das Internet, abgewickelt werden. Die Plattform ist dabei auf einem Server-Computer installiert, der in einer dem Fachmann bekannten Weise über einen Client-Computer bedient wird, der in dem Netzwerk mit dem Server-Computer verbunden ist.

Zur Durchführung bzw. Bearbeitung von Prozessen enthält die CARBON-Plattform insbesondere Datenkomponenten, welche den Zugriff auf verschiedene Datenquellen und -senken steuern und zur Durchführung der Vorgänge benötigte Daten, wie beispielsweise Kundendaten, bereitstellen, einen so genannten CARBON-Host, welcher Basisdienste, wie beispielsweise Druckdienste oder einen Zugriff auf Eingabegeräte wie Handscanner oder Chipkartenleser, bereitstellt, sowie Komponenten, welche die bei der Bearbeitung eines Vorgangs erfassten und verarbeiteten Daten nachgeschalteten Systemen, wie beispielsweise Buchhaltungssystemen oder Systemen zur Datenhaltung, übergeben.

Prozesse werden innerhalb der CARBON-Plattform durch Vorgänge abgebildet, denen jeweils ein Vorgangsbearbeitungsmodul 10 zur Durchführung der Vorgänge zugeordnet ist. Der modulare Aufbau ermöglicht es dabei, Prozesse in Teilprozesse zu gliedern, die Bestandteil einer Vielzahl von Prozessen sind. Durch dieses Prinzip müssen Teilprozesse nur einmal als Vorgang implementiert werden und können bei der Bearbeitung eines Gesamtprozesses aufgerufen werden, ohne dass eine Implementierung in jedem Gesamtvorgang erforderlich ist.

Bei der Bearbeitung eines Prozesses werden somit in der Regel gleichzeitig mehrere einen Teilprozess abbildende Vorgänge durchgeführt, die jeweils mittels eines Vorgangsbearbeitungsmoduls 10 abgearbeitet werden. Zur Verwaltung der verschiedenen Vorgangsbearbeitungsmodule 10 verfügt die CARBON-Plattform über einen Kontextmanager, der insbesondere auch zum Initialisieren der Vorgangsbearbeitungsmodule 10 verwendet wird.

Als Beispiel für einen Teilvorgang, der innerhalb einer Vielzahl von Gesamtvorgängen verwendet werden kann, ist hier etwa die Erfassung von Kundendaten zu nennen, die anhand einer manuellen Eingabe oder durch das Auslesen einer Chipkarte erfolgt.

Die Vorgänge werden auf einer grafischen Benutzeroberfläche bearbeitet, die auf dem Anzeigemittel der Datenverarbeitungsanlage dargestellt wird und in Form von Masken 50 realisiert ist. In der Regel werden Vorgänge auf mehreren Masken 50 bearbeitet, die sequentiell aufgerufen und angezeigt werden.

Die Masken 50 enthalten Datenfelder 70, in denen die Werte von Datenelementen angezeigt werden, die anhand der Maske 50 erfasst bzw. bearbeitet werden. Neben den Datenfeldern 70 befinden sich Label 80, welche die Datenelemente bezeichnen. Zudem weisen die Masken 50 Kontrollfelder auf, bei deren Betätigung eine den Kontrollfeldern zugeordnete Operation durchgeführt wird. Die Kontrollfelder sind vorzugsweise ebenfalls mit einem Label 80 versehen, welches ihre Funktion angibt.

Zur Darstellung und Steuerung der Masken 50 sowie zur Verarbeitung der für einen Vorgang relevanten Daten und zur Durchführung weiterer Operationen sind innerhalb der CARBON-Plattform Vorgangsbearbeitungsmodule 10 vorgesehen. Eine bevorzugte Ausgestaltung eines Vorgangsbearbeitungsmoduls 10 ist dabei in Figur 1 dargestellt.

Beim Starten eines Vorgangsbearbeitungsmoduls 10 werden vorzugsweise sequentiell der Datencontainer 20, die Funktionseinheit 30, sowie eine Maskenflusssteuerungskomponente 40 instanziiert und initialisiert.

Die Maskenflusssteuerungskomponente 40 wählt dabei die jeweils anzuzeigende Maske 50 aus, die dann von der Präsentationskomponente 60, welche von der Maskenflusssteuerungskomponente 40 gestartet wird, an dem Anzeigemittel dargestellt wird. Die Reihenfolge, in der die Masken 50 abgearbeitet werden, ist in einer Konfigurationsdatei *FormFlow.config* angegeben, auf welche die Maskenflusssteuerungskomponente 40 zugreift.

Es kann dabei vorgesehen sein, verschiedene grafische Benutzeroberflächen für verschiedene Anzeigemittel bereitzustellen, da beispielsweise als Anzeigemittel genutzte Monitore von Verkaufsautomaten wesentlich kleiner sind als Monitore an Verkaufsplätzen in einer Filiale. Ein unterschiedlicher Maskenaufbau kann dabei durch verschiedene Konfigurationsdateien *FormFlow.config* erreicht werden, die an das jeweilige Anzeigemittel angepasst sind. Je nach verfügbarem Anzeigemittel wird dann eine andere Konfigurationsdatei *FormFlow.config* von der Maskenflusssteuerungskomponente 40 verwendet.

Beim Start des Vorgangsbearbeitungsmoduls 10 ermittelt die Maskenflusssteuerungskomponente 40 anhand der Konfigurationsdatei *FormFlow.config* die erste Maske 50 in der Reihenfolge der darzustellenden Masken 50. Ist diese abgearbeitet, wird die Folgemaske anhand der Konfigurationsdatei *FormFlow.config* ermittelt, an die Präsentationskomponente 60 übergeben und dargestellt. Ein Steuerbefehl zum Maskenwechsel kann dabei beispielsweise an ein Kontrollfeld ("Weiter-Button") angebunden werden, dessen Betätigung insbesondere den Aufbau einer Folgemaske auslöst.

Die in einer Maske 50 angezeigten Datenfelder 70 und Kontrollfelder sowie die Label 80, die diesen Feldern zugeordnet sind, werden in einer Konfigurationsdatei gespeichert, auf welche die Präsentationskomponente 60 zugreift, um die Maske 50 in dem Anzeigemittel als grafische Benutzeroberfläche darzustellen.

Werte und Eigenschaften der für die Bearbeitung eines Vorgangs relevanten Datenelemente sind in dem Datencontainer 20 gespeichert und innerhalb des Datencontainers 20 zu Datenobjekten zusammengefasst. Eine besonders bevorzugte Ausführungsform eines Datenobjekts wird dabei im Folgenden als Aspekt 90 bezeichnet.

Dabei enthält ein Aspekt 90 den Wert und eine oder mehrere Eigenschaften sowie eine Kennung der in dem Datencontainer 20 gespeicherten Datenelemente.

Die Konfiguration der Aspekte 90 erfolgt anhand der Konfigurationsdatei *DataContainer.config,* welche den Inhalt des Datencontainers 20 festlegt, der beim Start des Vorgangsbearbeitungsmoduls vorliegt. Beim Initialisieren des Datencontainers 20 wird diese Datei ausgelesen, und die Aspekte 90 werden mit vorbestimmten Startwerten initialisiert. Die Konfigurationsdatei *DataContainer.config* gibt somit den Anfangszustand des mit dem Vorgangsbearbeitungsmodul 10 bearbeiteten Vorgangs an.

Bei der Initialisierung des Datencontainers 20 erfolgt insbesondere eine Serialisierung der Aspekte 90 bzw. der Konfigurationsdatei *DataContainer.config,* d.h. eine Umwandlung der in dieser Datei im XML-Format angegebenen Aspekte 90 in eine Zeichenfolge, die in einem Speicher der Datenverarbeitungsanlage abgelegt wird.

Jedem Datenfeld 70 einer Maske 50 ist ein Aspekt 90 zugeordnet. Zur Darstellung der Werte der Aspekte 90 auf der grafischen Benutzeroberfläche werden diese durch die Präsentationskomponente 60 aus dem Datencontainer 20 ausgelesen und in den vorgesehenen Datenfeldern 70 einer Maske 50 angezeigt.

Aspekte 90 müssen jedoch nicht an ein Datenfeld 70 angebunden werden, sondern können Daten betreffen, die nicht auf der grafischen Benutzeroberfläche angezeigt werden sollen. Vorzugsweise wird allerdings jedes innerhalb des Vorgangsbearbeitungsmoduls 10 verwendete und bearbeitete Datenelement in Form eines Aspekts 90 in dem Datencontainer 20 gespeichert, so dass die Informationsverarbeitung innerhalb des Vorgangsbearbeitungsmoduls 10 ausschließlich anhand von Aspekten 90 erfolgt, und der Zustand eines Vorgangs zu jeder Zeit vollständig in dem Datencontainer 20 gespeichert ist.

Die Konfigurationsdatei *DataContainer.config* des Datencontainers 20 ist vorzugsweise als XML-Dokument ausgebildet. Die Konfiguration eines Aspekts 90 erfolgt dabei beispielsweise durch einen Ausdruck der folgenden generischen Form:

```
     <aspect name=Name constName=constName>
          <attribute> m </attribute>
          <value> n </value>
     </aspect>
```

Mit *Name* ist dabei die Kennung des Aspekts 90 und mit *constNa*me der so genannte Konstantenname, der für den Zugriff auf den Aspekt 90 verwendet wird, angegeben. Der Bezeichner *attribute* bezeichnet in dem generischen Ausdruck eine oder mehrere Eigenschaften des Aspekts 90, die durch den Wert *m* festgelegt werden. Mit *value* wird der Wert des Aspekts 90 bezeichnet, der durch den Ausdruck *n* bestimmt wird.

Zur Speicherung verschiedener Arten von Daten sind dabei vorzugsweise unterschiedliche Aspekttypen vorgesehen. Dabei werden beispielsweise folgende Aspekttypen bereitgestellt:
- Aspekte 90 vom Typ *StringAspect* zum Speichern von Zeichenketten,
- Aspekte 90 vom Typ *LongAspect* zum Speichern von so genannten Long-Werten, d.h. ganzen Zahlen eines ersten Wertebereichs,
- Aspekte 90 vom Typ *IntAspect* zum Speichern von so genannten Int-Werten, d.h. ganzen Zahlen eines zweiten Wertebereichs,
- Aspekte 90 vom Typ *ShortAspect* zum Speichern von so genannten Short-Werten, d.h. ganzen Zahlen eines dritten Wertebereichs,
- Aspekte 90 vom Typ *DoubleAspect* zum Speichern von so genannten Double-Werten, d.h. Dezimalzahlen eines bestimmten Wertebereichs und mit einer bestimmten Anzahl von Dezimalstellen,
- Aspekte 90 vom Typ *CurrencyAspect* zum Speichern von Zahlen in einem Währungsformat,
- Aspekte 90 vom Typ *BooleanAspect* zum Speichern Boole'scher Werte,
- Aspekte 90 vom Typ *DateAspect* zum Speichern von Datumswerten,
- Aspekte 90 vom Typ *ArrayListAspect* zum Speichern von einspaltigen Listen und
- Aspekte 90 vom Typ *DataTableAspect* zum Speichern von mehrspaltigen Listen.

Die beispielhaft genannten Aspekttypen lassen sich in die folgenden drei Klassen einteilen:
- Allgemeine Aspekte, umfassend die Typen *BooleanAspect* und *StringAspect,*
- Zahlenaspekte, umfassend die Typen *LongAspect, IntAspect, ShortAspect, DoubleAspect, DateAspect* und *CurrencyAspect,* sowie
- Datenaspekte, umfassend die Typen *ArrayListAspect* und Data*TableAspect*

Die Aspekte 90 der verschiedenen Aspekttypen verfügen dabei entsprechend der Zugehörigkeit des Aspekttyps zu einer der drei dargestellten Gruppen über bestimmte konfigurierbare Eigenschaften, die in der Konfigurationsdatei *DataContainer.config* angegeben werden.

Allgemeine Aspekte können an ein Datenfeld 70 einer Maske 50 gebunden werden, wobei bezüglich dieser Eigenschaft in der Konfigurationsdatei angegeben werden kann, ob das zugehörige Datenfeld 70 aktiviert ist oder nicht. Die Präsentationskomponente 60 wertet diese Angabe aus und stellt das dem Aspekt 90 zugeordneten Datenfeld 70 in Abhängigkeit dieser Angabe in einer Maske 50 dar. Die Darstellung erfolgt dabei insbesondere nur dann, wenn in dem Aspekt 90 angegeben ist, dass das Datenfeld 70 aktiviert ist.

Es kann angegeben werden, ob es sich bei dem Datenfeld um ein Pflichtfeld, d.h. ein obligatorisch bei der Bearbeitung eines Vorgangs zu bearbeitendes Datenfeld 70, oder um ein optional zu bearbeitendes Datenfeld 70 handelt. Die Präsentationskomponente 60 erkennt den Wert dieser Eigenschaft und kann Datenfelder 70 entsprechend des Wertes unterschiedlich darstellen. Beispielsweise kann für optionale Felder ein weißer und für Pflichtfelder ein farbiger Hintergrund angezeigt werden.

Eine Überprüfung, ob ein Pflichtfeld bearbeitet worden ist, erfolgt dabei vorzugsweise bei der Betätigung des "Weiter"-Buttons einer Maske.

Zusätzlich zu diesen Eigenschaften der allgemeinen Aspekte kann für Zahlenaspekte ein maximaler und/oder ein minimaler Wert angegeben werden, den der Aspekt annehmen kann. Ferner können die möglichen Werte eines Zahlenaspekts, mit Ausnahme des Aspekts vom Typ *DateAspect,* auf bestimmte diskrete Werte eingeschränkt werden.

Mit Ausnahme des Aspekts 90 vom Typ DateAspect, kann ebenfalls die maximale Länge der das Datenelement repräsentierenden Zeichenkette vorgegeben werden. Diese Eigenschaft bzw. Beschränkung wird dabei vorzugsweise von dem Präsentationsmodul 60 erkannt und ausgewertet, welches die Länge der entsprechenden Datenfelder 70 an die in dem Aspekt 90 angegebene maximale Länge der Zeichenkette anpasst, so dass eine Eingabe längerer Zeichenketten in dem Datenfeld 70 nicht möglich ist.

Vorzugsweise ist es jedoch auch für den *DateAspect* möglich, die zugelassenen Werte zu begrenzen. Beispielsweise kann es dabei vorgesehen sein, dass die zugelassenen Datumswerte auf vorgegebene Tage eines Monats, oder auf ein Intervall vor und/oder nach einem vorgegebenen Datum eingeschränkt werden können. Die letztgenannte Beschränkung ermöglicht es dabei beispielsweise auch, bei der Erfassung eines Geburtsdatums eines Kunden in einfacher Weise zu überprüfen, ob der Kunde volljährig ist bzw. ein vorgegebenes Mindestalter überschritten hat.

Bei Datenaspekten können Werte sowie die Eigenschaften der allgemeinen Aspekte und vorzugsweise auch der Zahlenaspekte für jeden Eintrag einer Liste in dem *ArrayListAspect* und für jeden Eintrag einer Tabelle in einem *DataTableAspect* separat angegeben werden. Ferner wird für jeden Wert eines Aspekts angegeben werden, in welcher Zeile einer Liste oder Tabelle und in welcher Spalte einer Tabelle er angeordnet ist.

Die Synchronisation zwischen den Werten der an die Datenfelder 70 einer Maske 50 angebundenen Aspekte 90 und dem Inhalt der Datenfelder 70 wird durch die Präsentationskomponente 60 des Vorgangsbearbeitungsmoduls 10 vorgenommen.

Nach dem Aufrufen einer anhand der Konfigurationsdatei *FormFlow.config* festgelegten Maske 50 durch die Maskenflusssteuerungskomponente 40 ermittelt die Präsentationskomponente 60 zunächst die Werte der an die Datenfelder 70 der Maske 50 angebundenen Aspekte 90 und stellt diese Werte in den Datenfeldern 70 der Maske 50 dar. Dabei handelt es sich entweder um die in der Konfigurationsdatei *DataContainer.config* vorgegebenen Werte der Aspekte 90 oder - falls es sich bei der Maske 50 nicht um die erste Maske 50 eines Vorgangs handelt - um Werte, die bei der Bearbeitung einer der vorangegangenen Masken 50 des Vorgangs generiert worden sind.

Ferner können Aspekte 90, wie später genauer erläutert, ebenfalls aus einer Datei entnommen werden, die vorzugsweise als XML-Dokument ausgebildet ist. Diese Datei kann dem Vorgangsbearbeitungsmodul 10 beispielsweise von einem anderen Vorgangsbearbeitungsmodul 10 bereitgestellt werden, so dass das Resultat eines ersten Vorgangs bei der Bearbeitung eines nachfolgenden zweiten Vorgangs verwendet werden kann.

Erfolgt eine Veränderung des Inhalts eines Datenfeldes 70 aufgrund einer Eingabe des Bedieners, so erfasst die Präsentationskomponente 60 den veränderten Inhalt des Datenfeldes, identifiziert den angebundenen Aspekt 90 und ersetzt dessen Wert durch den geänderten Inhalt des Datenfeldes 70.

Die Verarbeitung der bei der Bearbeitung eines Vorgangs erfassten und in dem Datencontainer 20 innerhalb von Aspekten 90 gespeicherten Daten erfolgt anhand der Funktionseinheit 30 des Vorgangsbearbeitungsmoduls 10. Diese stellt Operationen bereit, die nach dem Empfangen eines entsprechenden Befehls von der Funktionseinheit 30 durchgeführt werden.

Die Operationen können dabei an ein Kontrollfeld einer Maske 50 angebunden werden, so dass die Betätigung des Kontrollfeldes die Ausführung der Operation anstößt. Vorzugsweise ist dabei jedem Kontrollfeld einer Maske 50 eine Operation zugeordnet.

Die Durchführung von Operationen durch die Funktionseinheit 30 kann jedoch alternativ oder ergänzend zu einem Aufruf anhand eines Kontrollfeldes beim Auftreten von Signalen angestoßen werden, die beispielsweise von einem Bediener der Datenverarbeitungsanlage mittels eines Eingabemittels erzeugt werden.

Darüber hinaus können Operationen selbstverständlich ebenfalls von vorhergehend ausgeführten Operationen aufgerufen werden.

Die Funktionseinheit 30 stellt dabei vorzugsweise insbesondere als Validate-Methoden bezeichnete Operationen zur Verfügung, die den Wert eines Aspekts 90 validieren. Bei der Validierung wird überprüft, ob der Wert eines Aspekts 90 vorgegebene Eigenschaften aufweist, bei denen es sich vorzugsweise um die in dem Aspekt 90 angegebenen Eigenschaften handelt.

Die Validate-Methoden werden anhand eines in eine Maske 50 eingebundenen Kontrollfeldes, vorzugsweise jedoch durch ein Signal erzeugt, das der Bediener mittels des Eingabemittels verursacht. Beispielsweise kann es sich dabei um den Druck auf eine "Eingabetaste" einer Tastatur handeln.

Eine besondere Ausführungsform einer Validate-Methode überprüft dabei beispielsweise wie bereits erwähnt, ob ein Datenfeld 70, bei dem es sich um ein Pflichtfeld handelt, bearbeitet worden ist. Diese spezielle Validate-Methode ist dabei an den "Weiter"-Button einer Maske 50 angebunden.

Das Ergebnis der Validate-Methode gibt an, ob der Wert eines Aspekts 90 die vorgegebene Eigenschaft erfüllt. Beim Vorliegen des Ergebnisses der Validate-Methoden können von der Funktionseinheit 30 in Abhängigkeit des Ergebnisses weitere Operationen durchgeführt werden.

Erfüllt ein Wert eines Aspekts 90 die vorgegebenen Eigenschaften nicht, so werden Operationen durchgeführt, die als Exception-Methoden bezeichnet werden. Vorzugsweise werden dabei, von der Funktionseinheit 30 gesteuert, Fehlermeldungen innerhalb der Maske 50 angezeigt, die den Bediener darüber informieren, dass ein erfasster Wert eines Aspekts 90 bzw. Datenfeldes 70 eine bestimmte Eigenschaft nicht erfüllt. Der Text der Fehlermeldung ist dabei in einer Konfigurationsdatei des Vorgangsbearbeitungsmoduls 70 abgelegt.

Zur weiteren Verarbeitung der Daten kann eine Vielzahl weiterer Operationen von der Funktionseinheit 30 durchgeführt oder aufgerufen werden, die durch Kontrollfelder, durch mittels des Eingabemittels erzeugte Signale oder durch vorausgehend durchgeführte Operationen, wie beispielsweise der Validate-Methode, aufgerufen werden.

Zur Manipulation von Aspekten 90 werden dabei in bevorzugten Ausführungsformen der Erfindung eine oder mehrere der folgenden Operationen bereitgestellt:
- Methoden zum Auslesen von Aspekten,
- Methoden zum Auslesen von Werten aus Aspekten eines bestimmten Aspekttyps,
- Methoden zum Anlegen von Aspekten,
- Methoden zum Setzen von Werten von Aspekten eines bestimmten Typs,
- Methoden zum Kopieren von Aspekten,
- Methoden zum Umbenennen und Löschen von Aspekten,
- Methoden zum Prüfen der Existenz bestimmter Aspekte,
- Methoden zum Prüfen, ob bestimmte Aspekte initialisiert sind,
- Methoden zum Löschen von Werten von Aspekten,
- Methoden zum Ändern einer oder mehrerer Eigenschaften eines Aspekts,
- Methoden zum Überprüfen, ob ein Aspekt, der an ein Pflichtfeld angebunden ist, einen Wert aufweist,
- Methoden zum Ermitteln der Anzahl der Einträge eines *Array-ListAspects* oder eines *DataTableAspects*
- Methoden zum Transformieren eines oder mehrerer Aspekte in eine XML-Datei und
- Methoden zum Transformieren einer XML-Datei in einen oder mehrere Aspekte.

Anhand dieser Methoden kann die Funktionseinheit 30 über die in der Konfigurationsdatei *DataContainer.config* angegebenen und beim Start des Vorgangsbearbeitungsmoduls 10 initialisierten Aspekte 90 hinaus weitere Aspekte 90 erzeugen, und sie kann vorhandene Aspekte löschen.

Ferner kann sie insbesondere Aspekte 90 in XML-Dateien umwandeln und umgekehrt. Die Umwandlung eines Aspekts 90 in eine XML-Datei entspricht dabei einer Deserialisierung des Aspekts 90, bei der im Speicher der Datenverarbeitungsanlage Zeichenfolgen, welche die Aspekte 90 repräsentieren, in eine Datei des XML-Formats transformiert werden. Dabei wird in dem XML-Dokument insbesondere eine Zuordnung zwischen der Kennung und dem Wert des Aspekts 90 gespeichert.

Das XML-Dokument kann von dem Vorgangsbearbeitungsmodul 10 gespeichert und weiteren Vorgangsbearbeitungsmodulen 10 und/oder weiteren Komponenten der CARBON-Plattform übergeben werden.

In einer zweckmäßigen Ausführungsform der Erfindung ist es dabei vorgesehen, dass die Eigenschaften des Aspekts 90 nicht in das XML-Dokument aufgenommen werden, da diese vor allem für die Datenverarbeitung und insbesondere für die Prüfung der Datenelemente innerhalb des Vorgangsbearbeitungsmoduls 10 verwendet werden.

Weitere Operationen, die von der Funktionseinheit 30 durchgeführt bzw. aufgerufen werden können, steuern Zugriffe auf Peripheriegeräte wie beispielsweise Drucker zum Ausdrucken von Werten etwa auf ein Formular oder Erfassungsgeräte wie etwa Chip- oder Magnetkartenleser. Ferner werden Operationen bereitgestellt, welche Basisdienste wie beispielsweise Dienste zur Durchführung von Berechnungen oder Dienste zur Abfrage von Datenquellen ausführen bzw. entsprechende Komponenten der CARBON-Plattform zur Ausführung der Basisdienste ansprechen.

Die letztgenannte Ausführungsform ist dabei besonders vorteilhaft, da die Operationen der Basisdienste in der Regel bei der Bearbeitung einer Vielzahl von Vorgängen durchgeführt werden, und vorzugsweise nicht in der Funktionseinheit 30 des Vorgangsbearbeitungsmoduls 30 implementiert, sondern von separaten Modulen der CARBON-Plattform über Schnittstellen bereitgestellt und von der Funktionseinheit 30 aufgerufen werden.

Die Dienste zur Abfrage von Daten aus Datenquellen werden auch als LookUp-Operationen bezeichnet und erlauben beispielsweise eine Datenbankabfrage während der Bearbeitung eines Vorgangs. Anhand der LookUp-Operationen ist es somit etwa möglich, nach der Erfassung eines Namens und/oder einer Identifikationsnummer eines Kunden, weitere Angaben über den Kunden, die in einer Datenbank unter dem Namen und/oder der Identifikationsnummer gespeichert sind, abzufragen und in einem Aspekt 90 zu hinterlegen.

Ein typisches Beispiel für eine Vorgangsbearbeitung, bei der die dargestellten Basisdienste verwendet werden, ist die Erfassung mehrerer Geldbeträge, die etwa beim Verkauf mehrerer Waren oder Dienstleistungen anfallen und deren Summe von dem Vorgangsbearbeitungsmodul 10 abgespeichert wird.

Zunächst werden die Geldbeträge oder die verkauften Waren oder Dienstleistungen in mehreren Datenfeldern 70 erfasst. Falls die Erfassung der Waren oder Dienstleistungen anstelle der Geldbeträge vorgesehen ist, können die angefallenen Geldbeträge nach der Erfassung durch eine LookUp-Operation in einer Datenbank ermittelt werden und als Werte in einen oder mehrere Aspekte 90 eingetragen werden. Diese Aspekte 90 können dabei entweder in der Konfigurationsdatei *DataCointainer.config* festgelegt sein oder von der Funktionseinheit 30 angelegt werden. Falls eine Anzeige der Beträge auf dem Anzeigemittel der Datenverarbeitungsanlage gewünscht ist, werden diese Aspekte 90 an ein Datenfeld 70 angebunden.

Ferner kann es vorgesehen sein, dass die Bezeichnungen der Waren oder Dienstleistungen und die zugehörigen anfallenden Geldbeträge in einem *DataTableAspect* hinterlegt sind, und ein an diesen Aspekt 90 angebundenes Datenfeld 90 als Liste ausgebildet ist, aus der die verkauften Waren oder Dienstleistungen ausgewählt werden können. In diesem Fall braucht die LookUp-Operation nicht in Anspruch genommen zu werden.

Die Summe der Werte der Aspekte 90, welche die angefallenen Geldbeträge enthalten, wird in einem weiteren Aspekt 90 innerhalb des Datencontainers 20 des Vorgangsbearbeitungsmoduls 10 abgelegt. Dieser kann wiederum anhand der Konfigurationsdatei *DataContainer.config* vorgegeben oder dynamisch von der Funktionseinheit 30 angelegt werden. Zur Summenbildung führt die Funktionseinheit 30 eine entsprechende Rechenoperation aus bzw. ruft eine entsprechende Rechenoperation auf und hinterlegt das von dieser Operation ermittelte Resultat als Wert in dem weiteren Aspekt 90.

In einer bevorzugten Ausführungsform der Erfindung ist es vorgesehen, Aspekte 90 innerhalb des Datencontainers 20 zu Aspektgruppen zusammenzufassen. In der Konfigurationsdatei *Data-Container.config* kann eine Definition von Aspektgruppen die folgende Angabe erfolgen, die beispielhaft eine Aspektgruppe beschreibt, die zwei Aspekte 90 enthält:

```
     <aspectGroups>
          <add key = Gruppenname value = constName1,
                                           constName2>
     </aspectGroups>
```

Mit "Gruppenname" ist hier dabei der Name der Aspektgruppe und constName1 sowie constName1 bezeichnen die von der Aspektgruppe umfassten Aspekte 90 anhand ihres Konstantennamens.

Die Zusammenfassung von Aspekten 90 zu Aspektgruppen ermöglicht die gleichzeitige Durchführung von Operationen der Funktionseinheit 30 für mehrer Aspekte 90.

Ein Beispiel, das die Vorteile der Zusammenfassung von Aspekten 90 zu Aspektgruppen aufzeigt, ist der zeitgleiche Aufruf einer Operation zur Veränderung der Eigenschaft der Aspekte 90 einer Aspektgruppe, die angibt, ob die den Aspekten 90 zugeordneten Datenfelder 70 aktiv sind.

Ist es bei der Bearbeitung eines bestimmten Vorgangs etwa erforderlich, Umzugsdaten eines Kunden zu erfassen, falls dieser eine Umzug vorgenommen hat, so wird den einzelnen Datenelementen der Umzugsdaten, wie beispielsweise die neue Straße, die neue Hausnummer, die neue Postleitzahl und der neue Ort, vorzugsweise jeweils ein Aspekt 90 zugeordnet, der an eine Datenfeld 70 angebunden ist, das beim Start des Vorgangsbearbeitungsmoduls 10 nicht aktiviert ist.

Ferner werden die den Umzugsdaten zugeordneten Aspekte 90 in einer Aspektgruppe zusammengefasst und es wird eine Kontrollfeld in die entsprechende zur Bearbeitung vorgesehene Maske 50 eingebracht, an das eine Operation der Funktionseinheit 30 angebunden ist, welche die Eigenschaft der in dieser Aspektgruppe enthaltenen Aspekten 90 verändert, die angibt, ob die den Aspekten 90 zugeordneten Datenfelder 70 aktiviert sind.

Stellt der Bediener des Vorgangsbearbeitungsmoduls 10 nun während der Bearbeitung des Vorgangs fest, dass der Kunden umgezogen ist, betätigt er einmalig das Kontrollfeld, und alle zur Erfassung der Umzugsdaten erforderlichen Datenfelder 70 erscheinen zeitgleich auf dem Anzeigemittel.

Dabei erkennt die Präsentationskomponente 60 die von der an das Kontrollfeld angebundenen Operation vorgenommene Veränderung der genannten Eigenschaft der Aspekte 90 und stellt daraufhin die den Aspekten 90 zugeordneten Datenfelder 70 in der entsprechenden Maske 50 dar.

Die Bedienung des Vorgangsbearbeitungsmoduls 10 wird hierdurch sehr komfortabel und übersichtlich.

Über die bereits genannten Funktionalitäten hinaus ist es der Funktionseinheit 30 auch möglich, weitere Vorgangsbearbeitungsmodule 10 zu starten, wobei das Vorgangsbearbeitungsmodul 10, aus dem ein weiteres Vorgangsbearbeitungsmodul 10 gestartet wird, entweder beendet werden kann oder pausiert. Die Verwaltung des in dieser Weise entstehenden "Stapels" von Vorgangsarten ist dabei die Aufgabe des Kontextmanagers der CARBON-Plattform.

Als einfaches Beispiel kann hier der Aufruf eines Vorgangsbearbeitungsmoduls 10 aus einem Menü der grafischen Benutzeroberfläche genannt werden, das selbst als Vorgangsbearbeitungsmodul 10 realisiert ist. Die Maske 50 des Vorgangsbearbeitungsmoduls 10, welches die Menüfunktion implementiert, weist dabei Kontrollfelder auf, an die jeweils eine Methode der Funktionseinheit 30 dieses Vorgangsbearbeitungsmoduls 10 angebunden ist, welche ein weiteres Vorgangsbearbeitungsmodul 10 startet.

Die Verwendung eines Datencontainers 20 ermöglicht es zudem, in einfacher Weise Datensicherungen durchzuführen, da der "Zustand" eines Vorgangs zu jeder Zeit in dem Datencontainer 20 gespeichert ist. Dabei kann der Inhalt des Datencontainers 20 durch eine von der Funktionseinheit 30 durchgeführte Sicherungsoperation gespeichert werden. Die Speicherung erfolgt dabei vorzugsweise wie bereits beschrieben in einem XML-Dokument.

Die Sicherungsoperation kann durch die Betätigung eines in einer Maske 50 dargestellten Kontrollfeldes, durch ein mittels des Eingabemittels erzeugtes Signal oder durch eine zuvor aufgerufene Operation, wie beispielsweise einer durchgeführten Berechnung, gestartet werden. Letzteres entspricht einer Verwendung so genannter Checkpoints innerhalb der Bearbeitungsreihenfolge eines Vorgangs.

In einem bevorzugten Ausführungsbeispiel wird eine Sicherung bei jedem Maskenwechsel durchgeführt. Dabei wird die Sicherungsoperation an das Kontrollfeld angebunden, dessen Betätigung einen Wechsel auf die folgende Maske 50 des Vorgangsbearbeitungsmoduls 10 bewirkt.

Die dargestellte Sicherungsfunktion ermöglicht es, den Zustand eines Vorgangs beispielsweise nach dem Auftreten eines Fehlers innerhalb des Vorgangsbearbeitungsmoduls oder nach einem Systemabsturz innerhalb der Datenverarbeitungsanlage wiederherzustellen. Dazu wird bei einem erneuten Start des Vorgangsbearbeitungsmoduls die Datei ausgelesen, welche durch die Sicherungsoption angelegt worden ist.

Eine Speicherung der Aspekte 90, die sich in dem Datencontainer 20 befinden, erfolgt zudem auch dann, wenn ein Vorgang vollständig abgearbeitet ist. Vorzugsweise werden die Aspekte nach der Deserialisierung als XML-Dokument gespeichert, welches dann das Resultat der Bearbeitung eines Vorgangs vollständig angibt.

Das XML-Dokument kann einem weiteren Vorgangsbearbeitungsmodul 10 übergeben werden, welches die enthaltenen Daten verwendet.

Ferner kann das XML-Dokument einem nachgeschalteten System übergeben werden. Hierbei kann es sich beispielsweise um ein System zur Datenhaltung handeln, welches erfasste Daten eines Kunden in einer Datenbank speichert, oder um ein Finanzbuchhaltungssystem, durch das die Geldbeträge abgerechnet werden, die bei der Bearbeitung eines oder mehrerer Vorgänge angefallen sind.

In einer vorteilhaften Ausführungsform der Erfindung ist es vorgesehen, Session-Objekte anzulegen, die verschiedene zur Bearbeitung eines Gesamtvorgangs verwendete Vorgangsbearbeitungsmodule 10 zusammenfassen.

Durch einen Session-Manager wird den zur Bearbeitung eines Vorgangs verwendeten Vorgangsbearbeitungsmodulen 10 dabei eine dem Session-Objekt eindeutig zugeordnete Session-ID übergeben. Nach der Durchführung jedes Teilvorgangs speichern die entsprechenden Vorgangsbearbeitungsmodule 10 dann die in den Aspekten 90 innerhalb des Datencontainers 20 enthaltenen Werte zusammen mit der Session-ID in einer Datenbank der CARBON-Plattform ab. Vor der Speicherung werden die Aspekte 90 dabei vorzugsweise wie vorbeschrieben in ein XML-Dokument umgewandelt.

Nach Beendigung aller Teilvorgänge werden dann alle in der Datenbank unter derselben Session-ID gespeicherten XML-Dokumente ausgelesen und konsolidiert.

Auf diese Weise lassen sich vorteilhaft Datensätze erzeugen, welche die während eines Gesamtvorgangs erfassten bzw. verarbeiteten Daten enthalten. Diese Datensätze können dann nachgeschalteten Systemen zur Datenhaltung oder -verarbeitung übergeben werden.

Die dargestellten beispielhaften Ausgestaltungen der Erfindung zeigen, dass ein aus Vorgangsbearbeitungsmodulen 10 bestehendes Vorgangsbearbeitungssystem bereitgestellt wird, das sich zur Durchführung einer Vielzahl unterschiedlicher Geschäftsprozesse eignet. Der Fachmann erkennt, dass die Anpassung des Systems an einen bestimmten Gesamtprozess in einfacher Weise durch eine Bereitstellung geeigneter Vorgangsbearbeitungsmodule 10 erreicht werden kann, die über einen an die für den Prozess bzw. einen Teilprozess relevanten Daten angepassten Datencontainer 20 sowie über eine Funktionseinheit 30 verfügen, welche die für die Durchführung des Prozesses bzw. einzelner Teilprozesse erforderlichen Operationen bereitstellt bzw. aufruft.

### Bezugszeichenliste:

- 10: Vorgangsbearbeitungsmodul
- 20: Datencontainer
- 30: Funktionseinheit
- 40: Maskenflusssteuerungskomponente
- 50: Maske
- 60: Präsentationskomponente
- 70: Datenfeld
- 80: Label
- 90: Datenobjekt ("Aspekt")

## Patentansprüche

1. Vorgangsbearbeitungsmodul,
**dadurch gekennzeichnet,**
**dass** es wenigstens eine Komponente (30, 60) zum Erfassen und/oder Bearbeiten von Datenelementen und einen Datencontainer (20) aufweist, wobei der Datencontainer (20) Datenobjekte (90) umfasst, die jeweils einem Datenelement zugeordnet sind und veränderbare Werte und vorgegebene Eigenschaften der Datenelemente enthalten, und wobei die Komponente zum Erfassen und/oder Bearbeiten von Datenelementen die in den Datenobjekten (90) enthaltenen Werte verändert und bei einer Veränderung eines Wertes in einem Datenobjekt (90) überprüft, ob der geänderte Wert die in dem Datenobjekt (90) enthaltenen Eigenschaften aufweist.

2. Vorgangsbearbeitungsmodul nach Anspruch 1,
**dadurch gekennzeichnet,**
**dass** die Datenobjekte (90) jeweils einem Datenfeld (70) zugeordnet sind, das innerhalb einer grafischen Benutzeroberfläche auf einem Anzeigemittel darstellbar ist.

3. Vorgangsbearbeitungsmodul nach einem der Ansprüche 1 und 2,
**dadurch gekennzeichnet,**
**dass** es eine Präsentationskomponente (60) aufweist, welche einen Inhalt der Datenfelder (70) und die Werte der zugeordneten Datenobjekte (90) synchronisiert.

4. Vorgangsbearbeitungsmodul nach einem der vorangegangenen Ansprüche,
**dadurch gekennzeichnet,**
**dass** die Präsentationskomponente (60) die Datenfelder (70) in Abhängigkeit einer in den Datenobjekten (90) enthaltenen Angabe darüber, ob die Datenfelder (70) aktiviert sind, innerhalb der grafischen Benutzeroberfläche darstellt.

5. Vorgangsbearbeitungsmodul nach einem der vorangegangenen Ansprüche,
**dadurch gekennzeichnet,**
**dass** es eine Funktionseinheit (30) aufweist, die Operationen zur Bearbeitung der in dem Datencontainer (20) enthaltenen Datenobjekte (90) durchführt.

6. Vorgangsbearbeitungsmodul nach einem der vorangegangenen Ansprüche,
**dadurch gekennzeichnet,**
**dass** der Datencontainer (20) wenigstens eine mehrere Datenobjekte (90) umfassende Datenobjektgruppe aufweist, wobei eine von der Funktionseinheit (30) bereitgestellte Operation zur Bearbeitung der Datenobjekte (90) für die von der Datenobjektgruppe umfassten Datenobjekte (90) gleichzeitig durchgeführt wird.

7. Vorgangsbearbeitungsmodul nach einem der vorangegangenen Ansprüche,
**dadurch gekennzeichnet,**
**dass** die Funktionseinheit (30) eine Operation zum Erzeugen von Datenobjekten (90) bereitstellt.

8. Vorgangsbearbeitungsmodul nach einem der vorangegangenen Ansprüche,
**dadurch gekennzeichnet,**
**dass** die Datenobjekte (90) eine Kennung der den Datenobjekten (90) zugeordneten Datenelemente enthalten.

9. Vorgangsbearbeitungsmodul nach einem der vorangegangenen Ansprüche,
**dadurch gekennzeichnet,**
**dass** die Funktionseinheit (30) eine Operation bereitstellt, welche die Datenobjekte (90)in ein XML-Dokument umwandelt, wobei eine Zuordnung zwischen der in einem Datenobjekt (90) enthaltenen Kennung und dem in dem Datenobjekt (90) enthaltenen Wert in dem XML-Dokument gespeichert wird.

10. Vorgangsbearbeitungsmodul nach einem der vorangegangenen Ansprüche,
**dadurch gekennzeichnet,**
**dass** die Funktionseinheit (30) wenigstens eine Operation zum Verändern der Eigenschaften der in dem Datencontainer (20) enthaltenen Datenobjekte (90) bereitstellt.

11. Vorgangsbearbeitungsmodul nach einem der vorangegangenen Ansprüche,
**dadurch gekennzeichnet,**
**dass** die Funktionseinheit (30) eine Operation bereitstellt, die ein weiteres Vorgangsbearbeitungsmodul (10) startet.

12. Vorgangsbearbeitungssystem zum Bearbeiten eines Vorgangs, bei dem der Vorgang in wenigstens zwei Teilvorgänge aufgeteilt ist, wobei jedem Teilvorgang ein Vorgangsbearbeitungsmodul (10) nach einem der vorangegangenen Ansprüche zur Bearbeitung des Teilvorgangs zugeordnet ist.

13. Verfahren zum Erfassen und/oder Verarbeiten eines Datenelements,
**dadurch gekennzeichnet,**
**dass** bei der Erfassung und/oder bei der Verarbeitung des Datenelements ein Wert innerhalb eines dem Datenelement zugeordneten Datenobjekts (90) verändert wird und dass überprüft wird, ob der geänderte Wert eine in dem Datenobjekt (90) angegebene Eigenschaft aufweist.
